# EUROPEAN PATENT SPECIFICATION

(11) **EP 0 772 073 B1**
(45) Date of publication and mention of the grant of the patent: **28.12.2005**
(21) Application number: 96307538.7
(22) Date of filing: 17.10.1996
(51) Int. Cl.: G02F 1/136

(54) **Liquid crystal display**
Flüssigkristall-Anzeigevorrichtung
Dispositif d'affichage à cristal liquide

(30) Priority: 31.10.1995 JP 28318095
(43) Date of publication of application: 07.05.1997
(73) Proprietor: International Business Machines Corporation, Armonk, N.Y. 10504 (US)
(72) Inventor: Koike, Tetsushi, Sagamihara-shi, Kanagawa-ken (JP); Kodate, Manabu, Yokohama-shi, Kanagawa-ken (JP); Ikezaki, Mitsuru, Sagamihara-shi, Kanagawa-ken (JP)
(74) Representative: Ling, Christopher John

(56) References cited:
- EP-A- 0 504 792
- US-A- 4 894 690
- SID INTERNATIONAL SYMPOSIUM DIGEST OF TECHNICAL PAPERS, SAN JOSE, JUNE 14 - 16, 1994, vol. 25, 14 June 1994, MORREALE J, pages 255-258, XP000462708 LIBSCH F R ET AL: "ELECTROSTATIC DISCHARGE DAMAGE: HOW MUCH PROTECTION IS NEEDED FOR AMLCDS"
- PATENT ABSTRACTS OF JAPAN vol. 95, no. 007 & JP 07 181509 A (SHARP CORP), 21 July 1995,

## Description

### Field of the invention

The present invention is related to a liquid crystal display and a method for manufacturing the same, and particularly to a liquid crystal display in which countermeasures against static electricity are taken in the manufacturing process thereof, and a method for manufacturing the same.

### Background art

In the active matrix liquid crystal display using TFTs (Thin Film Transistors) or the like as switching elements, a liquid crystal is sealed between oppositely disposed glass substrates, and a voltage is applied to the liquid crystal to drive it. On one of the two oppositely disposed glass substrates, a plurality of pixels is formed in a matrix. In each pixel, a transparent display electrode of ITO (Indium Tin Oxide) or the like is formed, and a switching element such as TFT is connected to each display electrode.

The gate electrode and the drain electrode of the TFT of each pixel are respectively connected, for instance, to a gate line formed in the row direction and to a data line formed in the column direction, which are formed in the area between pixels. If the gate line is selected when gray-scale data is outputted on the data line, the gate of the TFT is turned on to enable the gray-scale data to be written from the drain region connected to the data line to the display electrode connected to the source region.

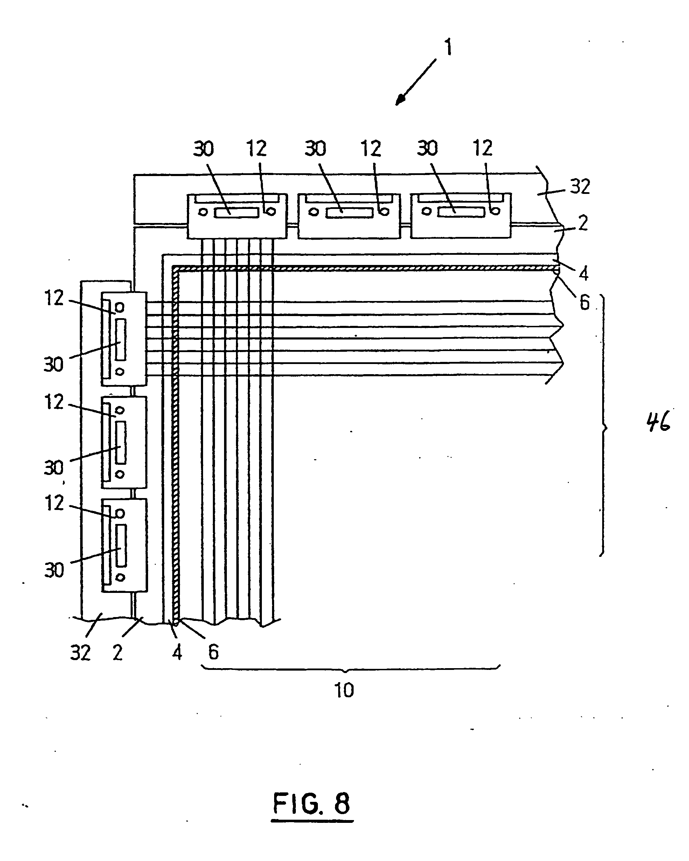

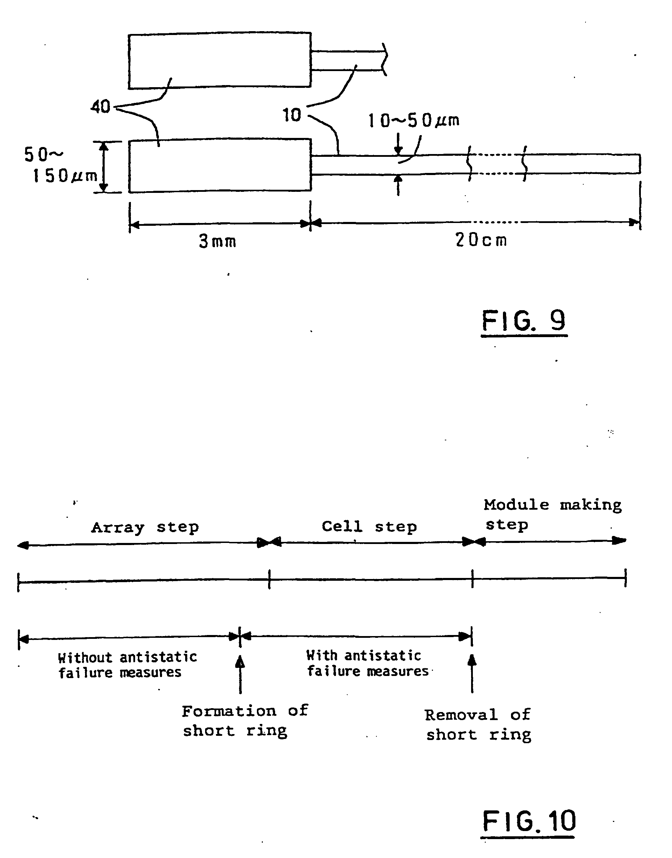

Referring to Figures 8 and 9, the wiring structure of a liquid crystal display is described in more detail. Figure 8 shows part of the plane of a liquid crystal display 1 manufactured by the conventional module making process. Inside the periphery of an array substrate 2, a colour filter substrate 4 is formed, and further inside the periphery of the colour filter substrate 4, a sealing agent 6 is formed. The area surrounded by the sealing agent 6 is an image display area, where many data line 10/gate lines 46 are intersecting at right angles to form many pixels in a matrix.

The OLB electrodes formed in the area surrounding the array substrate 2 are compression bonded by ACF (Anisotropic Conductive Film) to the leads on one side of a plurality of TCPs 12 on which a driver IC 30 is mounted. One TCP 12 corresponds, for instance, to every 200 of wirings 10 formed on the array substrate 2, but the wirings 10 are simplified in the figure. To the other side of the TCPs 12, a printed wiring board 32 is soldered.

The plane shape of the data lines or gate lines is shown in Figure 9. The OLB electrodes 40 compression bonded by ACF to the leads on one side of the TCPs 12 have a width of, for instance, 50 to 150 µm and a length of, for instance, 3 mm, and connected to the signal or gate lines 10 in one end thereof. The width of the data lines/gate lines 10 is 10 to 50 µm, and the length thereof is 20 cm for instance. The widths and lengths of the OLB electrode portions 40 and the data lines/gate lines 10 depend on the size and wiring density of the display.

Figure 8 is in a simplified form for clarity, but, for a colour display in a VGA display mode, the data lines/gate lines shown in Figure 9 are arranged in a number of 640 x 3 = 1920 in the row direction and 480 in the column direction to form a matrix.

A large number of data lines and gate lines are arranged in a matrix to form a liquid crystal display panel, as described above, and in addition, elements such as TFTs are formed. Thus, there is a problem of defects caused by static electricity in the manufacturing process of the liquid crystal display panel.

The static failure constituting a problem in the manufacturing process of the liquid crystal display panel and the conventional prevention measures therefor are briefly described below. The gate wirings and data wirings of a TFT array are electrically insulated by an insulation layer. For instance, a glass substrate as the array substrate is fixed by vacuum suction onto the plate of the apparatus for manufacturing the liquid crystal display, but the so-called peeling charge or the like occurs when the glass substrate is removed from the plate by deactivating the vacuum suction at the end of the process. Accordingly, static buildup is easily caused in the manufacturing process of the display panel of TFT/LCD by various reasons. The static buildup in gate lines or data lines causes a voltage considerably larger than the actual driving voltage to be applied to TFTs or wiring intersections, producing breakdown of the insulation film or the like. As a result, the function as switching elements is disabled or a fatal defect such as a line defect is caused.

The anti-static failure measures for preventing such static failure include, for instance, the formation of a protection circuit (short ring) as disclosed in the Published Unexamined Patent Application No. 63-220289. This is implemented by providing a reference potential wiring, and providing independent electrical connection between each signal wiring by the use of a two-terminal operation switching element.

Referring to Figure 10, the antistatic failure measures using the short ring in the manufacturing process of a liquid crystal display are described. First, the manufacturing process of a liquid crystal display is described in order of major process steps. The manufacturing process of a liquid crystal display comprises three steps, that is, an array step in which gate lines and data lines are formed on a glass substrate, and switching elements such as TFTs and display electrodes are formed; a cell step in which the formed array substrate and a colour filter substrate are laminated together, and a liquid crystal is injected and sealed by a sealing agent; and a module making step in which the attaching of TAB and the soldering of a printed wiring board are finally carried out.

The short ring is formed simultaneously with the formation of the data lines in the stage in which the source/drain electrodes of TFTs and the signal wiring are formed, only after the gate lines (gate lines), TFTs, and display electrodes are formed on the glass substrate in the array step. At this stage, all the gate lines and all the data lines are short-circuited using the material for forming the data lines, or connection is made between the reference potential wiring and the gate lines/data lines through the switching elements as described above, thereby to prevent static failure.

Thus, it can be said that the short ring is an effective countermeasure against static failure in the cell step before subsequent cutoff of the short ring, but the short ring cannot be formed before the data lines are formed in the array step, and accordingly, there is no effective countermeasure for preventing static failure almost throughout the array step at present.

However, as the recent liquid crystal display has a larger size and high definition, the length of the main line of gate lines and the number of gate lines increase, and the thickness of the interlayer insulation film becomes thinner. As a result, static buildup occurs in the gate lines formed on the glass substrate before the short ring has not been formed yet, breaking the interlayer insulation film in a pixel.

Accordingly, it is needed to take measures against static electricity in all the stages of the manufacturing process of a liquid crystal display.

Patent Abstracts of Japan, vol.95, no. 007 & JP 07 181509 A, 21 July 1995, discloses an active matrix liquid crystal display with switching elements formed in a pixel area on a substrate. A grounded conductive line is provided with small spacings to the signal lines so that static electricity is discharged safely from the signal lines to the grounded conductor line.

It is an object of the present invention to provide a liquid crystal display in which the occurrence of static failure before the formation of the short ring is prevented, and a method for manufacturing the same.

It is a further object of the present invention to provide a liquid crystal display in which the occurrence of static failure is prevented in substantially all the stages of the manufacturing process thereof, and a method for manufacturing the same.

### Disclosure of the invention

The invention provides an active matrix liquid crystal display comprising: a substrate; switching elements, arranged in a matrix in a display area on said substrate; a set of first metal conducting lines formed on said substrate and arranged to supply driving signals to said switching elements; and an insulation layer formed on said set of first metal conducting lines. The active matrix liquid crystal display is characterised in that: each of said first metal conducting lines are interrupted around the periphery of the display area to form a discharge gap, thereby separating each of said first metal conducting lines into two aligned segments, said discharge gap comprising discharge projections facing each other at the opposing edges of said segments; the insulation layer has through holes formed on each side of each of said discharge gaps and aligned with said segments, said insulation layer filling said discharge gaps; and the active matrix liquid crystal display further comprises: a set of second metal conducting lines formed on said insulation layer so as to fill said through holes, each of said second metal conducting lines being associated with a respective one of said first metal conducting lines, each of said second metal conducting lines being electrically connected through said through holes to each segment of a corresponding one of said first metal conducting lines to bridge said discharge gap of said corresponding one of said first metal conducting lines.

Further, the invention also provides a method for manufacturing an active matrix liquid crystal display, said method comprising: forming a matrix of switching elements in a display area on a substrate; forming a set of first metal conducting lines on said substrate and arranging them so as to supply driving signals to said switching elements; and forming an insulation layer on said set of first metal conducting lines. The method is characterised in that it further comprises the steps of: forming a discharge gap in each of the first metal conducting lines by interrupting and separating around the periphery of the display area each of said first metal conducting lines into two aligned segments and by providing discharge projections at the opposing edges of said segments; forming through holes in said insulation layer on each side of each of said discharge gaps and aligned with said segments, said insulation layer filling said discharge gaps; and forming a set of second metal conducting lines on said insulation layer so as to fill said through holes, each of said second metal conducting lines being associated with a respective one of said first metal conducting lines, each of said second metal conducting lines being electrically connected through said through holes to each segment of a corresponding one of said first metal conducting lines to bridge said discharge gap of said corresponding one of said first metal conducting lines.

Thus, in accordance with the present invention, lower-layer wirings to be formed at the initial stage in the manufacturing process of a liquid crystal display, for instance, gate wires, are disconnected in a predetermined area when they are formed, thereby to cause the static electricity building up in the gate lines to be discharged in this area. Accordingly, the pixel failure due to static electricity in the step prior to the formation of the short ring can be prevented.

Moreover, in the step of forming the short ring, the disconnected gate lines can be restored to the original gate lines by connecting them to the other metal wiring layer, and the antistatic measures can be transferred to the short ring.

### Brief Description of the Drawings

The invention will now be described, by way of example only, with reference to the accompanying drawings, in which:
Figure 1 showing the wiring structure of the liquid crystal display according to the embodiment of the present invention;
Figure 2 is a plan view of the wiring structure of the liquid crystal display according to the embodiment of the present invention;
Figure 3 is a cross-sectional view of the wiring structure of the liquid crystal display according to the embodiment of the present invention;
Figure 4 showing the method for manufacturing a liquid crystal display according to the embodiment of the present invention;
Figure 5 showing the method for manufacturing a liquid crystal display according to the embodiment of the present invention;
Figure 6 showing the method for manufacturing a liquid crystal display according to the embodiment of the present invention;
Figure 7 showing the method for manufacturing a liquid crystal display according to the embodiment of the present invention;
Figure 8 showing the wiring structure of a prior art liquid crystal display;
Figure 9 showing the wiring structure of a prior art liquid crystal display; and
Figure 10 is a figure for explaining the antistatic failure measures using a short ring in a prior art manufacturing process of a liquid crystal display.

### Detailed Description of the Invention

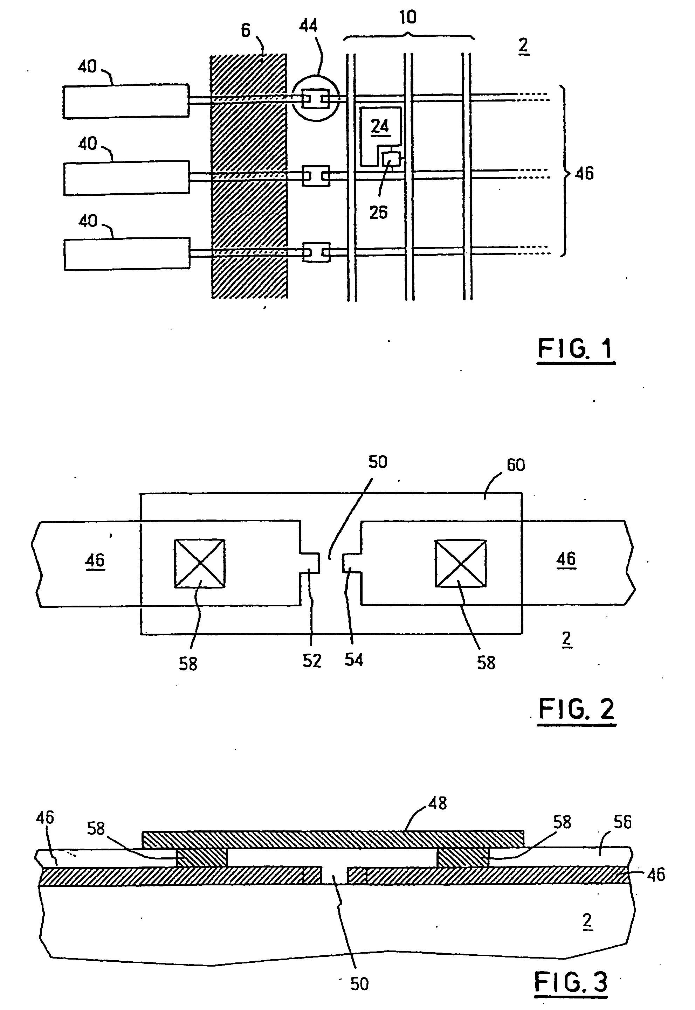

The preferred embodiment of the present invention is described using Figures 1 to 7.

The wiring structure of the gate lines of the liquid crystal display according to the preferred embodiment of the present invention is described using Figures 1 to 3. In this embodiment, the description is made on the assumption that the liquid crystal display is a colour liquid crystal display of a VGA display mode, which has a display area having a size of about 10 inches.

Figure 1 is a partially enlarged plan view of the peripheral portion of the panel of the liquid crystal display according to the present invention.

Data lines 10 and gate lines 46 formed on the array substrate 2 of the liquid crystal display are extending from the display area to OLB electrode portions 40 through a sealing agent 6 sealing a liquid crystal. A matrix-shaped area surrounded by the gate lines 46 and the data lines 10 is a pixel area, and display electrodes 24 are formed on the array substrate in the pixel area. In each display electrode 24, at the intersection of the gate line 46 and the data line 10, a TFT 26 for instance is formed as a switching element. Onto the array substrate 2, a colour filter substrate (not shown) is laminated through the sealing agent 6. Onto the OLB electrode portions 40 on the array substrate, a TCP (not shown) is bonded, for instance, by ACF.

An enlarged plan view of the area surrounded by a circle 44 in Figure 1 as seen from the array substrate side is shown in Figure 2, and the cross-sectional view thereof is shown in Figure 3. Using Figures 2 and 3, the characteristic features of the liquid crystal display according to the present invention are described.

On a glass substrate 2, the gate lines 46 made of a metal film of, for instance, Mo, Ta, Cr, Al or the like, and having a thickness of about 0.3 µm are formed. For a display area of 10 inches, the width of the gate lines 46 is about 20 µm, and the pitch is about 330 µm. The length of the gate lines 46 is about 20 cm.

The gate lines 46 are disconnected, and on the edges of the disconnected lines, discharge projections 52 and 54 are formed on both sides of a discharge gap 50 so as to provide a spacing of, for instance, about 6 µm, between them. The discharge gap 50 is formed at a position between the OLB electrode portion 40 and the pixel area, for instance, at a position which is about 0.5 mm apart from the pixel area toward the OLB electrode portion. The discharge projections 52 and 54 are positioned substantially at the centre of the edges of the disconnected portion of the gate line 46. Both the height of the discharge projections 52 and 54 from the gate line edges and the width thereof are about 6 µm.

On the gate lines 46 and between the discharge gap 50, a gate insulation film 56 of, for instance, a silicon oxide film is formed to a thickness of the order of 0.4 µm for instance. Two through holes 58 are made in the gate insulation film 56 in the vicinity of the discharge projections 52 and 54 of the respective gate lines 46.

Filling in the through holes 58, a metal wiring layer 48 of, for instance, Al having a thickness of about 0.3 µm is formed on the gate insulation film 56.

As described above, the liquid crystal display according to the embodiment of the present invention has a construction in which the gate lines are disconnected in part thereof, and the disconnected gate lines are electrically connected by the upper metal wiring layer via the through holes formed in the insulation film on the gate lines.

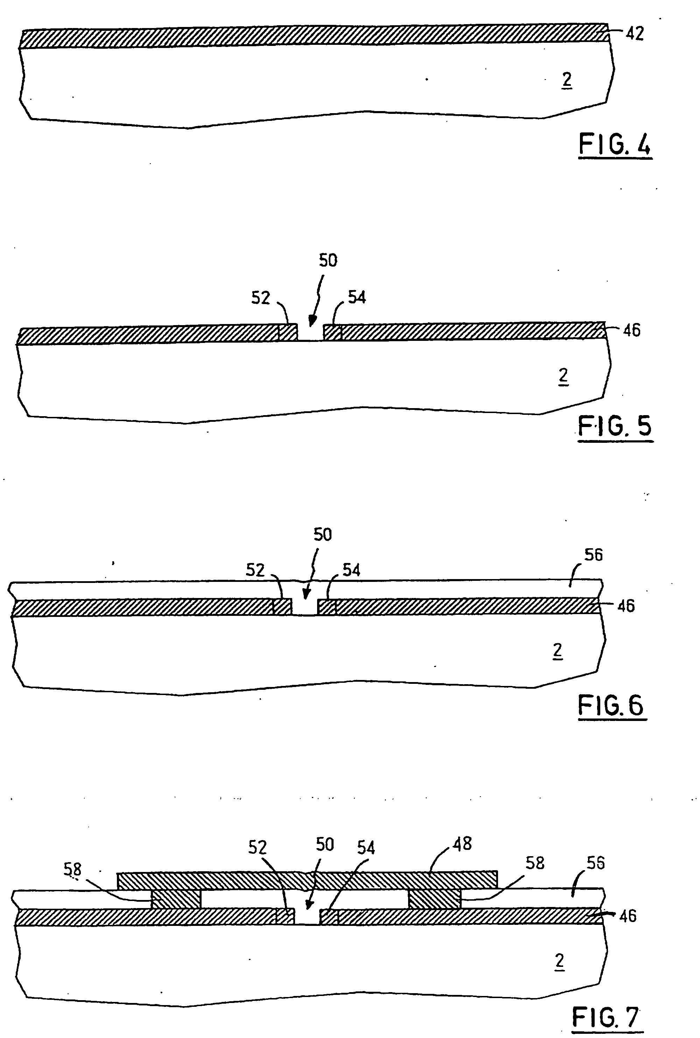

Now, the method for forming the gate lines of the liquid crystal display according to the embodiment of the present invention is described using Figure 4 to 7.

A metal film 42 of such as Mo, Ta, Cr, or Al is deposited, for instance, by sputtering on the whole surface of a glass substrate 2 to a thickness of about 0.3 µm for instance (Figure 4). Then the metal film 42 is patterned to form the gate electrodes (not shown) and gate lines 46 of a TFT (Figure 5). For a 10-inch display area, the width of the gate lines 46 is about 20 µm and the pitch is about 330 µm. The length of the gate lines 46 is about 20 cm.

At this point, each gate line 46 is patterned so as to be disconnected in part thereof, and a discharge gap 50 and discharge projections 52 and 54 are formed as shown in the plan view of Figure 3. The spacing of the discharge gap 50 is in the order of 6 µm. The discharge projections 52 and 54 are positioned substantially at the centre of the edges of the disconnected portion of the gate lines 46. The height of the discharge projections 52 and 54 from the edges and the width thereof are both about 6 µm. Although the shape of the discharge projections 52 and 54 is rectangular in this embodiment, it is not limited to this, but it may be triangular.or circular.

It is desirable that the spacing of the discharge gap 50 becomes smaller, but, in view of the positioning precision of the exposure apparatus in the manufacturing process, sufficient discharge is obtained even if it is in the order of 4 to 10 µm. Preferably, the discharge projections 52 and 54 are positioned at the centre of the gate line edges if possible. This is to prevent discharge to the different adjacent gate line from occurring if the discharge projections are biasedly provided, because the wiring spacing (pitch) of the gate wirings becomes narrower as the display density of the liquid crystal display becomes higher.

To determine the position of the discharge gap 50, various points should be considered in view of the likelihood of discharge, but, in a pragmatic approach, it is only necessary to determine the position of the discharge gap so that the areas of the disconnected gate lines 46 are substantially equal. However, since the possibility of such position giving equal areas being in the pixel area is high, it is desirable to provide a discharge gap 50 in the area between the pixel area and the OLB electrode 40 (for instance, the lead area). In this embodiment, the discharge gap 50 is formed between the OLB electrode portion 40 and the pixel area, at a position spaced apart by about 0.5 mm from the pixel area.

Thus, in accordance with the present invention, the wirings for the gate wirings can be formed in the array step and simultaneously a discharge gap as a countermeasure against static failure can be formed, so that static failure in the process prior to the formation of the short ring can be prevented.

Then a gate insulation film 56 is deposited, for instance, by a CVD process, on the whole surface to a thickness of about 0.4 µm for instance. At this point, the discharge gap 50 is filled in with the material for forming the gate insulation film 56 (for instance, a silicon oxide film) (Figure 6).

Thereafter, although not shown, after steps for forming a TFT, such as of depositioning a silicon nitride film and amorphous silicon, the gate insulation film 56 is patterned to make two through holes 58 in the gate insulation film 56 in the vicinity of the discharge projections 52 and 54 of each gate line 46. Then, over the whole surface, a metal wiring layer, about 0.3 µm thick, for forming data lines is formed. The through holes 58 are filled in with the deposited metal wiring layer. As the wiring material, a metal material equivalent to the gate wiring material including Al can be used.

Then, the metal wiring layer for forming data lines is patterned to form data lines. At this point, a patterning is simultaneously performed to form a gate line connecting layer 48, which electrically connects the disconnected gate lines 46 through the through holes 58 on both sides of the discharge gap 50 for the gate lines 46 (Figure 7). The OLB electrodes 40 to be connected to the gate line edges are also formed of the data line wiring metal at the same time. The formed OLB electrodes 40 are about 50 µm wide and about 3 mm long.

At this stage, the disconnected gate lines are electrically connected to each other and lose the function as means for preventing static failure, but, at the same time, by forming the conventional short ring when the data lines are formed, antistatic failure measures can be taken from then on.

As described above, in accordance with the present invention, the gate lines are disconnected with a predetermined length and width, so that the discharge of the charged gate lines occurs in the disconnected part. After the insulation film is grown, the static electricity building up in the gate lines is discharged in the disconnected part to break the insulation film in the disconnected part, but no effect on pixels is caused so that the occurrence of pixel failure can be prevented. By connecting the gate lines on both sides of the gap with the metal wiring constituting the other layer, the original gate line is restored and the effect of the antistatic measures is lost. However, at this point, a circuit for removing static electricity (short ring) can be simultaneously formed, and the function of antistatic measures is transferred to this short ring.

Accordingly, throughout the array and cell steps of the manufacturing process of a liquid crystal display, preventive measures against static failure can be provided. With the method for manufacturing a liquid crystal display of the present invention, it is not needed to increase the manufacturing process steps, but, only the modification of the mask used for patterning is needed to provide antistatic failure measures in the conventional manufacturing process.

The present invention can be variously modified without being limited to the above embodiment.

For example, although, in the above embodiment, the gate line connecting layer 48 was formed simultaneously with the formation of the data lines using the metal material for forming the data lines, other metal material can of course be used if an increase in the manufacturing process steps is not a matter of concern.

Further, since the present invention is characterized in that the lower metal layer (namely, the metal layer formed at the early stage of the manufacturing process) is provided as antistatic failure means to prevent static failure from the early stage of the process, it is to be understood that the present invention can apply not only to a liquid crystal display of the so-called bottom gate type (or inverse-stagger type) TFT structure as described in the above embodiment, in which gate lines are formed prior to the formation of data lines, that is, the gate lines are positioned below the data lines, but also to a liquid crystal display of the so-called top gate type (or stagger type) TFT structure.

## Claims

1. An active matrix liquid crystal display comprising:
a substrate (2);
switching elements (26), arranged in a matrix in a display area on said substrate:
a set of first metal conducting lines (46) formed on said substrate and arranged to supply driving signals to said switching elements; and
an insulation layer (56) formed on said set of first metal conducting lines;
the active matrix liquid crystal display being **characterised in that**:
each of said first metal conducting lines are interrupted around the periphery of the display area to form a discharge gap (50), thereby separating each of said first metal conducting lines into two aligned segments, said discharge gap comprising discharge projections (52, 54) facing each other at the opposing edges of said segments;
the insulation layer has through holes (58) formed on each side of each of said discharge gaps and aligned with said segments, said insulation layer filling said discharge gaps;
and the active matrix liquid crystal display further comprises:
a set of second metal conducting lines (48) formed on said insulation layer so as to fill said through holes, each of said second metal conducting lines being associated with a respective one of said first metal conducting lines, each of said second metal conducting lines being electrically connected through said through holes to each segment of a corresponding one of said first metal conducting lines to bridge said discharge gap of said corresponding one of said first metal conducting lines.

2. A method for manufacturing an active matrix liquid crystal display, said method comprising:
forming a matrix of switching elements (26) in a display area on a substrate (2);
forming a set of first metal conducting lines (46) on said substrate and arranging them so as to supply driving signals to said switching elements; and
forming an insulation layer (56) on said set of first metal conducting lines;
said method being **characterised in that** it further comprises the steps of:
forming a discharge gap (50) in each of the first metal conducting lines by interrupting and separating around the periphery of the display area each of said first metal conducting lines into two aligned segments and by providing discharge projections (52, 54) at the opposing edges of said segments;
forming through holes (58) in said insulation layer on each side of each of said discharge gaps and aligned with said segments, said insulation layer filling said discharge gaps; and
forming a set of second metal conducting lines (48) on said insulation layer so as to fill said through holes, each of said second metal conducting lines being associated with a respective one of said first metal conducting lines, each of said second metal conducting lines being electrically connected through said through holes to each segment of a corresponding one of said first metal conducting lines to bridge said discharge gap of said corresponding one of said first metal conducting lines.

3. A method for manufacturing an active matrix liquid crystal display as claimed in Claim 2 wherein said first metal conducting lines (46) are connected to the gate electrodes of said switching elements (26).

4. A method for manufacturing an active matrix liquid crystal display as claimed in Claim 3 wherein said second metal conducting lines (48) are formed using the material for forming the signal input side electrodes of said switching elements (26) and simultaneously with the formation of said signal input side electrodes.

5. A method for manufacturing an active matrix liquid crystal display as claimed in Claim 2 wherein said first metal conducting lines (46) are connected to the signal input side electrodes of said switching elements (26).

6. A method for manufacturing an active matrix liquid crystal display as claimed in Claims 5 wherein said second metal conducting lines (48) are formed using the material for forming the gate electrodes of said switching (26) elements and simultaneously with the formation of said gate electrodes.

## Patentansprüche

1. Aktivmatrix-Flüssigkristallanzeigevorrichtung, welche Folgendes umfasst:
ein Substrat (2);
Schaltelemente (26), die in einer Matrix in einer Anzeigefläche auf dem Substrat angeordnet sind;
einen Satz erster auf dem Substrat gebildeter metallischer Leiterbahnen (46), die so angeordnet sind, dass sie Steuersignale zu den Schaltelementen leiten; und
eine auf dem Satz erster metallischer Leiterbahnen gebildete Isolierschicht (56);
wobei die Aktivmatrix-Flüssigkristallanzeigevorrichtung **dadurch gekennzeichnet ist, dass**:
jede der ersten metallischen Leiterbahnen am Rand der Anzeigefläche in der Weise unterbrochen ist und eine Entladungslücke (50) bildet, dass jede dieser ersten metallischen Leiterbahnen in zwei entlang einer Achse ausgerichtete Abschnitte aufgeteilt ist, wobei die Entladungslücke hervorstehende Entladungsspitzen (52, 54) umfasst, welche an den entgegengesetzten Kanten der Segmente einander gegenüberstehen;
in der Isolierschicht auf jeder Seite jeder dieser Entladungslücken Durchgangslöcher (58) gebildet sind, die entlang der Achse der Segmente ausgerichtet sind, wobei die Isolierschicht die Entladungslücken ausfüllt;
und die Aktivmatrix-Flüssigkristallanzeigevorrichtung ferner Folgendes umfasst:
einen auf der Isolierschicht gebildeten Satz zweiter metallischer Leiterbahnen, welche die Durchgangslöcher ausfüllen, wobei jede der zweiten metallischen Leiterbahnen jeweils einer bestimmten ersten metallischen Leiterbahn zugeordnet ist und jede der zweiten metallischen Leiterbahnen über die Durchgangslöcher mit jedem Abschnitt einer entsprechenden ersten metallischen Leiterbahn elektrisch verbunden ist, um die Entladungslücke der entsprechenden ersten metallischen Leiterbahnen zu überbrücken.

2. Verfahren zur Herstellung einer Aktivmatrix-Flüssigkristallanzeigevorrichtung, welches Folgendes umfasst:
Bilden einer Matrix von Schaltelementen (26) in einer Anzeigefläche auf einem Substrat (2);
Bilden eines Satzes erster metallischer Leitrebahnen (46) auf dem Substrat und Anordnen dieser Leiterbahnen in der Weise, dass sie Steuersignale zu den Schaltelementen leiten; und
Bilden einer Isolierschicht 856) auf dem Satz erster metallischer Leiterbahnen;
wobei das Verfahren **dadurch gekennzeichnet ist, dass** es ferner die folgenden Schritte umfasst:
Bilden einer Entladungslücke (50) in jeder der ersten metallischen Leiterbahnen durch Unterbrechen und Trennen jeder der ersten metallischen Leiterbahn am Rand der Anzeigefläche in zwei entlang einer Achse ausgerichtete Abschnitte und durch Bereitstellen von hervorstehenden Entladungsspitzen (52, 54) an den entgegengesetzten Kanten der Segmente;
Bilden von Durchgangslöchern (58) in der Isolierschicht auf jeder Seite jeder der Entladungslücken, die entlang der Achse der Segmente ausgerichtet sind, wobei die Isolierschicht die Entladungslücken ausfüllt; und
Bilden eines Satzes zweiter metallischer Leiterbahnen (48) auf der Isolierschicht in der Weise, dass diese die Durchgangslöcher ausfüllen, wobei jede der zweiten metallischen Leiterbahnen jeweils einer bestimmten ersten metallischen Leiterbahn zugeordnet ist und jede der zweiten metallischen Leiterbahnen über die Durchgangslöcher mit jedem Abschnitt einer entsprechenden ersten metallischen Leiterbahn elektrisch verbunden ist, um die Entladungslücke der entsprechenden ersten metallischen Stromleitungen zu überbrücken.

3. Verfahren zur Herstellung einer Aktivmatrix-Flüssigkristallanzeigevorrichtung nach Anspruch 2, bei welchem die ersten metallischen Leiterbahnen (46) mit den Gateelektroden der Schaltelemente (26) verbunden sind.

4. Verfahren zur Herstellung einer Aktivmatrix-Flüssigkristallanzeigevorrichtung nach Anspruch 3, bei welchem die zweiten metallischen Leiterbahnen (48) gleichzeitig mit den Signaleingangselektroden der Schaltelemente (26) und aus demselben Material wie diese Elektroden gebildet werden.

5. Verfahren zur Herstellung einer Aktivmatrix-Flüssigkristallanzeigevorrichtung nach Anspruch 2, bei welchem die ersten metallischen Leiterbahnen (46) mit den Signaleingangselektroden der Schaltelemente (26) verbunden sind.

6. Verfahren zur Herstellung einer Aktivmatrix-Flüssigkristallanzeigevorrichtung nach Anspruch 5, bei welchem die zweiten metallischen Leiterbahnen (48) gleichzeitig mit den Gateelektroden der Schaltelemente (26) und aus demselben Material wie diese Gateelektroden gebildet werden.

## Revendications

1. Un dispositif d'affichage à cristal liquide à matrice active, comprenant :
un substrat (2) ;
des éléments de commutation (26), agencés en une matrice dans une zone d'affichage sur ledit substrat ;
un jeu de premières lignes conductrices (46) métalliques, formées sur ledit substrat et agencées pour fournir des signaux de commande auxdits éléments de commutation ; et
une couche d'isolation (56), formée sur ledit jeu de premières lignes conductrices métalliques ;
le dispositif d'affichage à cristal liquide à matrice active étant **caractérisé en ce que** :
chacune desdites premières lignes conductrices métalliques est interrompue autour de la périphérie de la zone d'affichage pour former un intervalle de décharge (50), de manière à séparer chacune desdites premières lignes conductrices métalliques en deux segments alignés, ledit intervalle de décharge comprenant des saillies de décharge (52, 54) tournées l'une vers l'autre sur les bords opposés desdits segments ;
la couche d'isolation comprend des trous traversants (58), formés sur chaque côté de chacun desdits intervalles de décharge et alignés avec lesdits segments, ladite couche d'isolation remplissant lesdits intervalles de décharge ;
et le dispositif d'affichage à cristal liquide à matrice active comprenant en outre :
un jeu de deuxièmes lignes conductrices (48) métalliques, formées sur ladite couche d'isolation pour remplir lesdits trous traversants, chacun desdites deuxièmes lignes conductrices métalliques étant associée à une ligne correspondante parmi lesdites premières lignes conductrices métalliques, chacune desdites deuxièmes lignes conductrices métalliques étant reliée électriquement, par l'intermédiaire desdits trous, à chaque segment d'une ligne correspondante desdites premières lignes conductrices métalliques, pour ponter ledit intervalle de décharge de ladite ligne correspondante parmi lesdites premières lignes conductrices métalliques.

2. Un procédé de fabrication d'un dispositif d'affichage à cristal liquide à matrice active, ledit procédé comprenant :
la formation d'une matrice d'éléments de commutation (26) dans une zone d'affichage sur un substrat (2) ;
la formation d'un jeu de premières lignes conductrices (46) métalliques sur ledit substrat et leur agencement, de manière à fournir des signaux de commande auxdits éléments de commutation ; et
la formation d'une couche d'isolation (56) sur ledit jeu des premières lignes conductrices métalliques ;
ledit procédé étant **caractérisé en ce qu'**il comprend en outre les étapes consistant à :
former un intervalle de décharge (50) dans chacune desdites premières lignes conductrices métalliques, en interrompant et en séparant autour de la périphérie de la zone d'affichage chacune desdites premières lignes conductrices métalliques en deux segments alignés, et en fournissant des saillies de décharge (52, 54) sur les bords opposés desdits segments ;
former des trous traversants (58) dans ladite couche d'isolation sur chaque côté de chacun desdits intervalles de décharge et alignés avec lesdits segments, ladite couche d'isolation remplissant lesdits intervalles de décharge ; et
former un jeu de deuxièmes lignes conductrices (48) métalliques sur ladite couche d'isolation, de manière à remplir lesdits trous traversants, chacune desdites deuxièmes lignes conductrices métalliques étant associée à une ligne respective parmi lesdites premières lignes conductrices métalliques, chacune desdites deuxièmes lignes conductrices métalliques étant connectée électriquement, par l'intermédiaire desdits trous, à chaque segment d'une ligne correspondante parmi lesdites premières lignes conductrices métalliques, pour ponter ledit intervalle de décharge de ladite ligne correspondante parmi lesdites premières lignes conductrices métalliques.

3. Un procédé de fabrication d'un dispositif d'affichage à cristal liquide à matrice active selon la revendication 2, dans lequel lesdites premières lignes conductrices métalliques (46) sont connectées aux électrodes de grille desdits éléments de commutation (26).

4. Un procédé de fabrication d'un dispositif d'affichage à cristal liquide à matrice active tel qu'indiqué dans la revendication 3, dans lequel lesdites deuxièmes lignes conductrices (48) métalliques sont formées en utilisant le matériau servant à former les électrodes de côté entrée de signal desdits éléments de commutation (26) et simultanément à la formation desdites électrodes de côté entrée de signal.

5. Un procédé de fabrication d'un dispositif d'affichage à cristal liquide à matrice active selon l'une quelconque des revendications 3 à 4, dans lequel lesdites premières lignes conductrices (46) métalliques sont connectées aux électrodes de côté entrée de signal desdits éléments de commutation (26).

6. Un procédé de fabrication d'un dispositif d'affichage à cristal liquide à matrice active selon la revendication 5, dans lequel lesdites deuxièmes lignes conductrices (48) métalliques sont formées en utilisant le matériau servant à former les électrodes de grille desdits éléments de commutation (26) et simultanément à la formation desdites électrodes de grille.
